# EUROPEAN PATENT APPLICATION

(11) **EP 2 420 595 A1**
(43) Date of publication of application: **22.02.2012**
(21) Application number: 10793915.9
(22) Date of filing: 12.05.2010
(51) Int. Cl.: C25B 1/24, C01B 7/20, C25B 9/00, C25B 15/08

(54) **FLUORINE GAS GENERATION DEVICE**

(30) Priority: 29.06.2009 JP 2009153149; 16.09.2009 JP 2009213873; 11.05.2010 JP 2010108931
(71) Applicant: Central Glass Company, Limited, Yamaguchi 755-0001 (JP)
(72) Inventor: MIYAZAKI, Tatsuo, 5253, Oaza Okiube, Ube-shi, Yamaguchi 755-0001 (JP); MORI, Isamu, 5253, Oaza Okiube, Ube-shi, Yamaguchi 755-0001 (JP)
(74) Representative: Manitz, Finsterwald & Partner GbR
(86) International application number: PCT/JP2010/058041
(87) International publication number: WO 2011/001744

(57) **Abstract**

A fluorine gas generation device includes an electrolytic cell that electrolyzes hydrogen fluoride in an electrolytic bath constituted of a molten salt containing hydrogen fluoride. The fluorine gas generation device liquefies and circulates a hydrogen fluoride gas vaporized from the molten salt and mist derived from the molten salt which is entrained on the gases generated by using a circulating device connected to a pipe on an upper portion of the electrolytic cell, thereby returning the hydrogen fluoride gas and the mist derived from the molten salt to the electrolytic cell.

## Description

### TECHNICAL FIELD

The present invention relates to a fluorine gas generation device, and particularly relates to a gas generation device capable of preventing clogging of a pipe with mist entrained on a gas generated, and a piping construction of the gas generation device.

### BACKGROUND OF THE INVENTION

Conventionally, there is known a fluorine gas generation device, which includes an electrolytic cell for electrolyzing hydrogen fluoride in an electrolytic bath constituted of hydrogen fluoride-containing molten salt. In the fluorine gas generation device, a main product gas containing a fluorine gas as a main component is generated on an anode side of the electrolytic cell, whereas a subsidiary product gas containing a hydrogen gas as a main component is generated on a cathode side of the electrolytic cell.

In such a fluorine gas generation device as described above, a hydrogen fluoride gas vaporized from the molten salt is mixed into the main product gas containing a fluorine gas as a main component on the anode side of the electrolytic cell, and at the same time, mist of the molten salt itself is mixed into the main product gas containing a fluorine gas as a main component on the anode side of the electrolytic cell. As a result, there occurs clogging of a pipe in the fluorine gas generation device while the fluorine gas generation device is used for a long period of time.

Similarly, both the hydrogen fluoride gas vaporized from the molten salt and the mist of the molten salt itself are also mixed into the subsidiary product gas containing a hydrogen gas as a main component on the cathode side of the electrolytic cell. As a result, there also occurs clogging of a pipe in the fluorine gas generation device while the fluorine gas generation device is used for a long period of time.

In addition, in the above-described fluorine gas generation device, generally, the fluorine gas (i.e., the main product gas) generated in the electrolytic cell is allowed to pass through a pressure regulator valve and then pass through a refining tower using an absorbent such as NaF, so that impurities are removed from the fluorine gas.
During this treatment of the fluorine gas, mist contained in the fluorine gas tends to cause not only clogging of the pipe as described above, but also clogging of the pressure regulator valve and clogging of the refining tower and deterioration of the absorbent.

For this reason, the pipe and the pressure regulator valve must be dismounted from the fluorine gas generation device at predetermined intervals and cleaned by washing. Further, a replacement work of the absorbent of the refining tower must be conducted at high frequency. In order to carry out these works, it is necessary to stop an operation of the electrolytic cell and carry out the replacement work of the pipe.

Patent Literature 1 discloses a technology of trapping mist on a filter that is inserted into a portion of a pipe. Even in this trapping method, the filter tends to suffer from clogging at certain intervals. Therefore, the filter must be replaced by a new filter, or the mist trapped must be washed out from the filter at regular intervals.

In order to conduct the replacement or washing of the filter, a disassembling work of the pipe must be conducted. Therefore, it is required that an operation of an electrolytic cell is stopped to replace the pipe. Accordingly, not only a complicated working but also deterioration in productivity tend to be caused.

Further, Patent Literature 2 discloses a technology of restoring a function of a filter for the purpose of prolonging a life of the filter. In the technology, a temperature adjusting mechanism is disposed in a portion of a pipe to adjust a temperature of the portion of the pipe. A hydrogen fluoride gas liquefied in the portion of the pipe is contacted with a filter inserted into the pipe, so that a solid matter deposited on a surface of the filter is dissolved to thereby prevent clogging of the filter.

### Citation List

### Patent Literature

Patent Literature 1: Japanese Patent Application Unexamined Publication No. 2005-179709
Patent Literature 2: Japanese Patent Application Unexamined Publication No. 2006-111900

### SUMMARY OF THE INVENTION

### Technical Problem

The gas generation device as described in the above Patent Literature 2 is constructed such that the filter is disposed downstream from the temperature adjusting mechanism disposed in the portion of the pipe. A clogging matter deposited on the filter is dissolved by contacting hydrogen fluoride liquefied in the temperature-controlled portion of the pipe with the filter disposed downstream from the temperature adjusting mechanism. Further, the clogging matter that causes clogging of the filter is allowed to remain in a wastewater tank disposed below the filter.

However, the clogging matter deposited on the filter contains components derived from the molten salt. Therefore, from the viewpoint of efficiency of use of materials for the electrolytic cell, it is undesirable to discharge the clogging matter as such without being treated.

Since in the gas generation device as described in the above Patent Literature 2, the filter is disposed downstream from the temperature adjusting mechanism, a route from the electrolytic cell to the filter is elongated. Therefore, it is expected that a concentration of impurities is increased due to contact between parts such as the pipe with the hydrogen fluoride containing the components derived from the molten salt. For this reason, it is undesirable and problematic to re-use the clogging matter deposited on the filter as the raw material for the electrolytic cell.

Further, in a case where the wastewater tank for reserving the clogging matter deposited on the filter is provided, additional works such as replacement and washing of the wastewater tank are required, so that working load is increased, and a further operation of the electrolytic cell must be stopped at regular intervals.

The present invention was made in view of the above-described problems encountered in the conventional gas generation device. An object of the present invention is to provide a fluorine gas generation device capable of circulating components derived from a molten salt which are present in a product gas generated in an electrolytic cell, particularly hydrogen fluoride, to the electrolytic cell and re-using the components derived from the molten salt.

### Solution to Problem

As a result of intense study for solving the above problems, the present inventors have found that by providing a temperature adjusting mechanism for circulating components derived from a molten salt, particularly hydrogen fluoride, in the vicinity of a gas outlet of an electrolytic cell, the components derived from the molten salt, particularly hydrogen fluoride, can be efficiently circulated to the electrolytic cell and re-used without providing a wastewater tank for reserving the materials derived from the molten salt which tend to cause clogging of the pipe.

That is, in one aspect of the present invention, there is provided a fluorine gas generation device that generates a fluorine gas by electrolyzing hydrogen fluoride in a molten salt containing potassium fluoride and hydrogen fluoride. The fluorine gas generation device includes an electrolytic cell electrolyzing hydrogen fluoride in an electrolytic bath constituted of the molten salt containing potassium fluoride and hydrogen fluoride to generate a main product gas containing a fluorine gas as a main component on a side of an anode and a subsidiary product gas containing a hydrogen gas as a main component on a side of a cathode, a first pipe that guides each of the main product gas and the subsidiary product gas from the electrolytic cell, the main product gas and the subsidiary product gas each containing a hydrogen fluoride gas vaporized from the molten salt in the electrolytic cell and mist derived from the molten salt which is entrained on the main product gas and the subsidiary product gas upon generation thereof, and a heat exchange mechanism that is disposed on the first pipe to adjust a temperature of a portion of the first pipe, wherein hydrogen fluoride liquefied in the portion of the first pipe whose temperature is adjusted by the heat exchange mechanism is returned to the electrolytic cell.

In a further aspect of the present invention, there is provided the above fluorine gas generation device, further including a dip tube that is connected to a lower portion of the first pipe and returns the liquefied hydrogen fluoride to the electrolytic cell, and a second pipe that is connected to the electrolytic cell and the first pipe and guides each of the main product gas and the subsidiary product gas which contains a hydrogen fluoride gas vaporized from the molten salt of the electrolytic cell and mist derived from the molten salt which is entrained on the main product gas and the subsidiary product gas upon generation thereof, wherein the dip tube is immersed in the electrolytic bath of the electrolytic cell such that a passage that guides each of the main product gas and the subsidiary product gas generated in the electrolytic cell, and a passage that returns the liquefied hydrogen fluoride to the electrolytic cell are provided separately from each other.

With this construction of the fluorine gas generation device of the present invention, the passage through which each of the product gases generated in the electrolytic cell is guided and the passage through which hydrogen fluoride contained in each of the production gases is circulated can be independently provided. Even in a case where a quantity of flow of each of the production gases is increased, hydrogen fluoride can be normally circulated.

Meanwhile, the term "lower portion" of the first pipe means a lower side portion of the first pipe which serves for guiding each of the production gases to an outside, that is, a portion of the first pipe which is located on the side of the electrolytic bath in which the molten salt of the electrolytic cell is reserved.

Further, a connecting portion at which the first pipe and the second pipe are connected with each other is located inside of the heat exchange mechanism that adjusts a temperature of the portion of the first pipe. With this arrangement, it is possible to reduce clogging of the connecting portion which is caused due to deposited matter derived from the molten salt.

In a still further aspect of the present invention, there is provided the above fluorine gas generation device, wherein the heat exchange mechanism is located in a position spaced by a distance of not more than 200 cm from an upper portion of a top plate of the electrolytic cell.

Meanwhile, the term "distance from an upper portion of a top plate of the electrolytic cell to the heat exchange mechanism" means a distance from a gas outlet of the first pipe which is disposed on the upper portion of the top plate of the electrolytic cell to a lower portion of a temperature adjusting device used as the heat exchange mechanism.

In a still further aspect of the present invention, there is provided the above fluorine gas generation device, wherein a supply pipe for supplying hydrogen fluoride is connected to the first pipe equipped with the heat exchange mechanism, and hydrogen fluoride is supplied into the first pipe equipped with the heat exchange mechanism through the supply pipe.

In a case where hydrogen fluoride is added into the first pipe in an amount of 0.01 to 0.12 equivalent when a temperature of an inside of the first pipe equipped with the heat exchange mechanism is in the range of -83°C to -50°C, it is possible to suppress rapid boiling and liquid level variation of the molten salt in the electrolytic cell and efficiently circulate hydrogen fluoride.

### Effects of Invention

According to the present invention, a fluorine gas generation device can be provided, which is capable of re-using components derived from a molten salt as raw materials for an electrolytic cell by liquefying and circulating the components derived from a molten salt in the vicinity of a gas outlet of the electrolytic cell, and further capable of stably and continuously supplying fluorine gas without need of disassembling and washing works of a valve and a pipe used for guiding a main product gas containing a fluorine gas as a main component and a subsidiary product gas containing a hydrogen gas as a main component which are generated from the electrolytic cell.

### BRIEF DESCRIPTION OF DRAWINGS

FIG. 1 shows an example of a system diagram of a fluorine gas generation device according to a first embodiment of the present invention.
FIG. 2 shows an example of a system diagram of a fluorine gas generation device according to a second embodiment of the present invention.
FIG. 3 shows another example of the system diagram of the fluorine gas generation device according to the second embodiment of the present invention.

### DETAILED DESCRIPTION OF THE INVENTION

Embodiments of the present invention will be explained hereinafter by referring to the accompanying drawings.

### [First Embodiment]

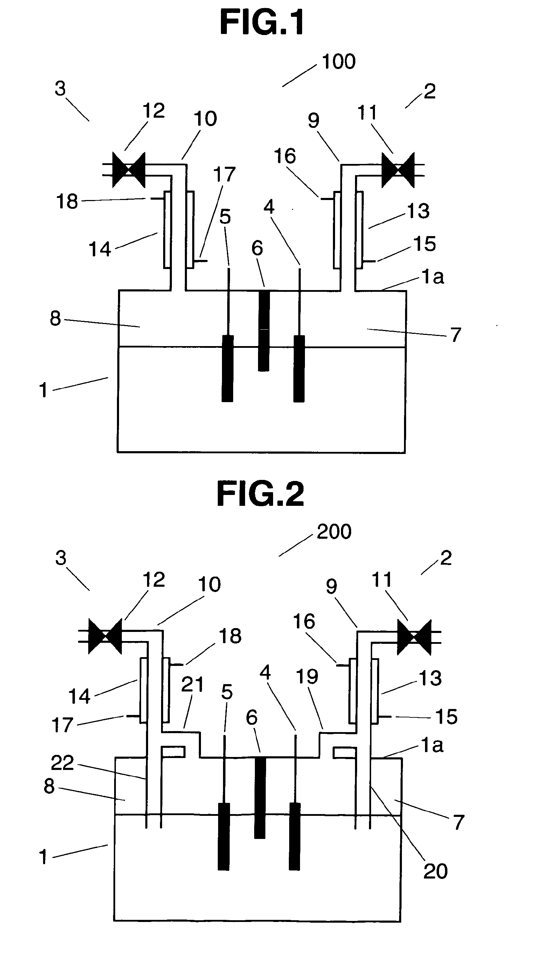

Referring to FIG. 1, a fluorine gas generation device 100 according to a first embodiment of the present invention is explained.

The fluorine gas generation device 100 is an apparatus in which a main product gas containing a fluorine gas as a main component as well as a subsidiary product gas containing a hydrogen gas as a main component are generated by electrolysis.

The fluorine gas generation device 100 includes an electrolytic cell 1 that generates a fluorine gas by electrolysis, a fluorine gas supply system 2 that supplies the main product gas (fluorine gas) generated from the electrolytic cell 1 to the outside, and a hydrogen gas supply system 3 that supplies the subsidiary product gas (hydrogen gas) generated with the hydrogen gas generated, to the outside.

First, the electrolytic cell 1 is explained.

A molten salt containing hydrogen fluoride (HF) is reserved in the electrolytic cell 1. In this embodiment, a mixture (KF·2HF) of hydrogen fluoride and potassium fluoride (KF) is used as the molten salt.

An inside space of the electrolytic cell 1 is divided into an anode chamber 7 and a cathode chamber 8 by a skirt 6 immersed in the molten salt. The anode chamber 7 and the cathode chamber 8 have an anode 4 and a cathode 5, respectively, which are immersed in the molten salt. By supplying an electric current from a power supply (not shown) between the anode 4 and the cathode 5, a fluorine gas (F₂) is generated as a main product gas at the anode 4, and
a hydrogen gas (H₂) is generated as a subsidiary product gas at the cathode 5. A carbon electrode is used as the anode 4, and an electrode made of soft iron, Monel, stainless steel or nickel is used as the cathode 5.

Since a melting point of KF·2HF is 71.7°C, a temperature of the molten salt is adjusted to the range of from 90°C to 100°C. Hydrogen fluoride is vaporized from the molten salt by an amount corresponding to a vapor pressure and mixed into the main product gas containing the fluorine gas as a main component and the subsidiary product gas containing the hydrogen gas as a main component which are generated from the anode 4 and the cathode 5 of the electrolytic cell 1, respectively. Further, a mixture KF·nHF of potassium fluoride (KF) and hydrogen fluoride (HF) as the components derived from the molten salt is mixed into the main product gas and the subsidiary product gas in the form of mist.

Thus, the main product gas containing the fluorine gas as a main component (hereinafter also referred to merely as "fluorine gas") which is generated at the anode 4 and introduced into the anode chamber 7, also contains the hydrogen fluoride gas vaporized from the molten salt and the mist component derived from the molten salt. Similarly, the subsidiary product gas containing the hydrogen gas as a main component (hereinafter also referred to merely as "hydrogen gas") which is generated at the cathode 5 and introduced into the cathode chamber 8, also contains the hydrogen fluoride gas vaporized from the molten salt and the mist component derived from the molten salt.

Next, a construction of the fluorine gas supply system 2 is explained.

A first fluorine gas pipe 9 for guiding the main product gas generated at the anode 4 to the outside is connected to the anode chamber 7. The first fluorine gas pipe 9 is connected to a top plate 1a of the electrolytic cell 1.

A jacket 13 is disposed on an outer circumferential surface of a portion of the first fluorine gas pipe 9 connected to the anode chamber 7. The jacket 13 serves as a heat exchange mechanism that adjusts a temperature of the first fluorine gas pipe 9. A valve 11 is disposed in the first fluorine gas pipe 9 on a downstream side of the jacket 13.

The heat exchange mechanism is not particularly limited to a specific one as long as it is capable of adjusting a temperature of an inside of the pipe. For instance, a heat exchanger using a jacket capable of allowing a thermal medium (heating medium or cooling medium) to pass therethrough, a shell-and-tube type heat exchanger (a multi-tube heat exchanger) in which a heat transfer tube is concentrically inserted into an outer tube, and fluid is allowed to pass through the respective tubes to perform heat exchange therebetween, a heat exchanger using a Peltier device, and the like, may be used.

A heating medium inlet pipe 15 and a heating medium outlet pipe 16 which allow a heating medium to pass through the heat exchange mechanism are connected to the jacket 13. Temperature adjustment of the first fluorine gas pipe 9 can be performed by flowing a heating medium through the jacket 13. The heating medium to be used is not particularly limited to a specific one as long as it is capable of performing the temperature adjustment of the first fluorine gas pipe 9.

Further, the jacket 13 is preferably arranged in a position as close to the top plate 1a of the electrolytic cell 1 as possible, that is, in a position in the vicinity of a gas outlet of the electrolytic cell 1. In a case where a distance from the top plate 1a of the electrolytic cell 1 to the jacket 13 becomes longer, clogging tends to occur in a portion of the first fluorine gas pipe 9 extending between the top plate 1a and the jacket 13 which remains uncovered with the jacket 13. Therefore, a distance from an upper portion of the top plate 1a of the electrolytic cell 1 to a lower portion of the jacket 13 is preferably set to be not less than 0 cm and not more than 200 cm, and more preferably not less than 10 cm and not more than 100 cm.

Further, it is preferred that the inside of the portion of the first fluorine gas pipe 9 on which the jacket 13 is disposed is filled with a packing material in order to efficiently conduct heat transfer from the jacket 13.

The packing material preferably has a corrosion resistance to a fluorine gas and a hydrogen fluoride gas. Examples of the packing material include nickel, Monel, stainless steel, iron and copper.

A regular packing material and an irregular packing material may also be used as the above packing material, but the packing material is not particularly limited to a specific one. The regular packing material may be, for example, in the form of a thin sheet with holes, recesses and projections, etc., a wire mesh, or a combination thereof. The irregular packing material may be, for example, in the form of a general-purpose product such as Raschig ring, pall ring, Tellerette packing, MacMahon packing, Heli pack, etc.

The term "regular packing material" means packing members suitable for regular stacking, and the term "irregular packing material" means packing members that are stacked irregularly, indiscriminately and in a random fashion.

A method of arranging the packing members is not particularly limited, and the packing members may be arranged at random. Further, an interval between the packing members is not particularly limited unless a gas flow is blocked by the packing members contacted with each other at too many portions thereof. The packing members may be partially contacted with each other, and disposed spaced apart from each other at intervals of about several millimeters.

For instance, when Raschig rings having a diameter of 4 mm to 10 mm are used as the irregular packing material, the packing members have partially contact portions and portions disposed spaced apart from each other at intervals of about 2 mm to 10 mm.

Next, a circulation process of the fluorine gas supply system 2 as constructed above is explained.

The fluorine gas (main product gas) generated at the anode 4 is guided by the first fluorine gas pipe 9, and then allowed to pass through the jacket 13 through which a heating medium is flowed, whereby the gas is cooled.

The fluorine gas (main product gas) generated at the anode 4 may contain, in addition to the fluorine gas itself, the hydrogen fluoride gas and the mist component derived from the molten salt. For instance, when the fluorine gas generation device is operated at atmospheric pressure by using KF·2HF as the raw material for the electrolytic cell 1, hydrogen fluoride in an amount of about 50 mmHg in terms of partial pressure thereof is contained in the fluorine gas guided from the anode chamber 7.

The first fluorine gas pipe 9 is thermally adjusted by the jacket 13 disposed on an outer circumferential surface of the first fluorine gas pipe 9, such that the temperature of the fluorine gas passing through the first fluorine gas pipe 9 is lowered to allow hydrogen fluoride to have a pressure not more than a vapor pressure of hydrogen fluoride and thereby liquefy hydrogen fluoride in the fluorine gas. The temperature of the fluorine gas within the first fluorine gas pipe 9 is preferably adjusted such that the temperature of hydrogen fluoride contained in the fluorine gas becomes not lower than a melting point thereof and not higher than a boiling point thereof, that is, within the range of from -83°C to 19°C.

The temperature within the first fluorine gas pipe 9 is preferably close to a melting point of hydrogen fluoride (-83°C). In a case where the temperature within the first fluorine gas pipe 9 is within the range of -83°C to -50°C, hydrogen fluoride can be efficiently liquefied. However, in a case where the temperature within the first fluorine gas pipe 9 is within the range of -50°C to 19°C, liquefaction of hydrogen fluoride tends to hardly occur due to influence of the vapor pressure of hydrogen fluoride.

For this reason, as described in Japanese Patent Application Unexamined Publication No. 2006-111900, a pipe for supplying hydrogen fluoride may be connected to a portion of the pipe (the first fluorine gas pipe 9) for taking out the fluorine gas generated in the electrolytic cell which is thermally adjusted, so that hydrogen fluoride is supplied to the portion of the pipe. In such a case, a concentration of hydrogen fluoride in the pipe may be increased to thereby increase an amount of hydrogen fluoride to be liquefied.

However, if an excessively large amount of hydrogen fluoride is added, the hydrogen fluoride concentration in the main product gas (F₂) generated in the electrolytic cell will be increased to thereby cause increase in a load in the subsequent processes of removing and refining hydrogen fluoride. In addition, the amount of hydrogen fluoride that is circulated may be increased, so that when hydrogen fluoride is returned to the electrolytic cell, rapid boiling and variation in liquid level of the molten salt occurs. Therefore, the amount of hydrogen fluoride to be added must be appropriately controlled.

That is, it is particularly preferred that the amount of hydrogen fluoride to be added is controlled to such an extent that the hydrogen fluoride concentration in the main product gas (F₂) generated in the electrolytic cell is not excessively increased, and rapid boiling and variation in liquid level of the molten salt hardly occurs.

Since the vapor pressure of hydrogen fluoride depends on temperature, it is preferred that an amount of hydrogen fluoride to be added is suitably adjusted on the basis of the temperature within the first fluorine gas pipe 9 by taking account of the vapor pressure of hydrogen fluoride. If the temperature of the inside of the first fluorine gas pipe 9 is within the range of -50°C to 19°C, the amount of hydrogen fluoride to be added is preferably set to 0.13 to 1.0 equivalent. Meanwhile, a suitable amount of hydrogen fluoride to be added can be calculated from vapor pressure curves of the molten salt (KF·nHF) and hydrogen fluoride.

As described above, if the temperature within the first fluorine gas pipe 9 is within the range of -83°C to - 50°C, it is possible to carry out efficient liquefaction of hydrogen fluoride without adding hydrogen fluoride. It is preferred to set the temperature within the first fluorine gas pipe 9 to about a melting point (-83°C) of hydrogen fluoride. If the temperature within the first fluorine gas pipe 9 is set to about -83°C, it is particularly preferred that the temperature within the first fluorine gas pipe 9 is set within the range of -65°C to -50°C and a suitable amount of hydrogen fluoride is added, in view of a load that is exerted to a temperature adjusting device (a heat exchange mechanism) and a cooling capacity.

If the temperature within the first fluorine gas pipe 9 is within the range of -83°C to -50°C, it is particularly preferred that the amount of hydrogen fluoride to be added is set to 0.01 to 0.12 equivalent. By adjusting the amount of hydrogen fluoride to be added, it is possible to suppress increase in hydrogen fluoride concentration in the main product gas (F₂) generated and efficiently circulate hydrogen fluoride without occurrence of rapid boiling and variation in liquid level of the molten salt (see Examples 3, 4 and Comparative Example 3 as described later) .

Meanwhile, the reaction in the electrolytic cell is expressed by the following reaction formula: 2HF→F₂+H₂ (anode: 2F⁻→F₂+2e⁻, cathode: 2H⁺+2e⁻→H₂), wherein one (1) equivalent of hydrogen fluoride indicates an amount of hydrogen fluoride charged which is necessary to be electrolyzed, that is, indicates the number of moles of hydrogen fluoride (HF) necessary to generate 1 mol of fluorine gas (F₂) and 1 mol of hydrogen gas (H₂).

Further, location of the pipe that supplies hydrogen fluoride is not particularly limited to a specific position as long as the pipe is located between an upper portion of the top plate 1a of the electrolytic cell and the thermally adjusted portion of the first fluorine gas pipe 9.

The above-described method of adding hydrogen fluoride into the first fluorine gas pipe 9 can be applied to both the first embodiment and a second embodiment (as explained later). Further, the method of adding hydrogen fluoride can be applied to a first hydrogen gas pipe 10 of the hydrogen gas supply system 3.

The hydrogen fluoride liquefied flows back to the anode chamber 7 through the first fluorine gas pipe 9 due to its own weight. When the hydrogen fluoride liquefied returns to the anode chamber 7, the mist containing the molten salt component is absorbed by the hydrogen fluoride liquefied. Thus, it is possible to return the hydrogen fluoride liquefied to the anode chamber 7 together with the molten salt component containing mist.

Although the fluorine gas generation device of the present invention can be operated without filling the first fluorine gas pipe with a packing material (see Example 1 as explained later), a packing material can be arranged within the first fluorine gas pipe 9 (see Example 2 as explained later). In a case where the packing material is arranged, the components derived from the molten salt are deposited onto a surface of the packing material. However, when hydrogen fluoride liquefied flows back through the first fluorine gas pipe 9 due to its own weight, the components derived from the molten salt and deposited on the surface of the packing material can be dissolved thereon, and then returned to the anode chamber 7 together with the hydrogen fluoride liquefied.

Next, a construction and a circulation process of the hydrogen gas supply system 3 are explained.

The hydrogen gas supply system 3 also has a same construction as that of the fluorine gas supply system 2. A jacket 14 disposed on a first hydrogen gas pipe 10 is connected with a heating medium inlet pipe 17 and a heating medium outlet pipe 18. By allowing a heating medium to flow through the jacket 14 between the heating medium inlet pipe 17 and the heating medium outlet pipe 18, the inside of the first hydrogen gas pipe 10 is cooled so that the hydrogen fluoride within the first hydrogen gas pipe 10 is liquefied and circulated. As a result, the molten salt component containing mist present in the hydrogen gas introduced into the pipe 10 can be returned to the cathode chamber 8 together with the hydrogen fluoride liquefied. A valve 12 is disposed in the first hydrogen gas pipe 10 on a downstream side of the jacket 14.

The above-described first embodiment can attain the following functions and effects.

In the fluorine gas generation device according to the first embodiment of the present invention, the heat exchange mechanism that is disposed on the respective pipes guiding the main product gas (fluorine gas) and the subsidiary product gas (hydrogen gas) is located in the vicinity of a gas outlet of the electrolytic cell. The portion of the heat exchange mechanism in which the hydrogen fluoride contained in the gases guided from the electrolytic cell is liquefied and circulated, is located in the vicinity of the gas outlet. With this arrangement, the components derived from the molten salt which are generated in the electrolytic cell can be absorbed in the vicinity of the gas outlet by the hydrogen fluoride liquefied, and then can be returned to the electrolytic cell in the form closely approximating to the raw materials of the molten salt.

Further, with the arrangement of the packing members within the pipes guiding the respective gases generated in the electrolytic cell, it is possible to enhance heat conduction within the pipes, make temperature gradient within the pipes uniform and efficiently liquefy hydrogen fluoride in the pipes.

Further, the adjacent packing members used in the present invention are disposed spaced apart from each other at intervals of about several millimeters therebetween. The intervals are considerably larger than a mesh size of a conventionally used filter having an opening of about several micrometers. Therefore, as compared with the filter having an opening of about several micrometers, the packing members have such a characteristic that pressure loss within the pipes is considerably low to thereby reduce clogging due to a solid matter of the components derived from the molten salt.

As explained above, in the first embodiment, if an amount of the respective gases to be generated in the electrolytic cell 1 is increased, a linear velocity of the respective gases in the pipes guiding the gases generated in the electrolytic cell becomes larger so that the upwardly flowing force of the generated gases exceeds the falling force of liquefied hydrogen fluoride which is caused due to its own weight. In such a case, the liquefied hydrogen fluoride cannot be normally returned to the electrolytic cell.

As a result of intense study on a method of circulating the components derived from the molten salt, particularly, hydrogen fluoride, generated from the fluorine gas generation device, the present inventors have found a piping construction which is capable of more efficiently conducting circulation of hydrogen fluoride.

The piping construction according to a second embodiment of the present invention will be explained hereinafter.

### [Second Embodiment]

Next, a fluorine gas generation device 200 according to the second embodiment of the present invention is explained by referring to FIG. 2. In the following, differences from the above first embodiment are mainly explained. Like reference marks denote like parts, and therefore, detailed explanations therefor are omitted.

In the following second embodiment, the fluorine gas supply system 2 and the hydrogen gas supply system 3 which are different in construction from those of the first embodiment are explained.

A second fluorine gas pipe 19 for guiding the main product gas generated at the anode 4 is connected to the anode chamber 7 through the top plate 1a of the electrolytic cell 1. Further, the second fluorine gas pipe 19 is connected at a downstream portion thereof to the first fluorine gas pipe 9.

A dip tube 20 is connected to a lower portion of the first fluorine gas pipe 9. The dip tube 20 extends through the anode chamber 7 and is immersed into the molten salt within the electrolytic cell 1.

An immersion length of the dip tube 20 is not particularly limited to a specific value. A material of the dip tube 20 which has corrosion resistance, for instance, Ni, Monel, etc., is preferably used. If the dip tube 20 made of stainless steel, iron, etc., is used, it is preferred to cover an outer circumferential surface of the dip tube 20 with a corrosion-resistant material such as PTFE.

The jacket 13 that performs the temperature adjustment of the first fluorine gas pipe 9 is disposed on a downstream side of a connecting portion in which the second fluorine gas pipe 19 is connected with the first fluorine gas pipe 9.

Similarly to the first embodiment, the jacket 13 that performs the temperature adjustment of the first fluorine gas pipe 9 is preferably disposed in the position as close to the top plate 1a of the electrolytic cell 1 as possible.

Next, a circulation process of the thus constructed fluorine gas supply system 2 is explained.

The main product gas (fluorine gas) which is generated at the anode 4 and contains the hydrogen fluoride gas vaporized from the molten salt and the components derived from the molten salt such as the molten salt mist, is guided to the second fluorine gas pipe 19, but is not directly guided to the first fluorine gas pipe 9. The main product gas passing through the second fluorine gas pipe 19 is then guided to the first fluorine gas pipe 9 for circulating hydrogen fluoride, so that the hydrogen fluoride present in the main product gas is liquefied at the portion of the first fluorine gas pipe 9 on which the jacket 13 being thermally adjusted is disposed.

The hydrogen fluoride liquefied flows back to the anode chamber 7 through the first fluorine gas pipe 9 due to its own weight. When the hydrogen fluoride liquefied returns to the anode chamber 7, the molten salt mist is absorbed by the hydrogen fluoride liquefied. Thus, it is possible to return the hydrogen fluoride liquefied to the anode chamber 7 together with the molten salt mist.

The hydrogen gas supply system 3 also has substantially the same construction as that of the fluorine gas supply system 2. A second hydrogen gas pipe 21 for guiding the subsidiary product gas (hydrogen gas) generated at the cathode 5 is connected to the cathode chamber 8 through the top plate 1a of the electrolytic cell 1. Further, the second hydrogen gas pipe 21 is connected at a downstream portion thereof to the first hydrogen gas pipe 10.

A dip tube 22 is connected to a lower portion (an upstream side) of the first hydrogen gas pipe 10. The dip tube 22 extends through the cathode chamber 8 and is immersed into the molten salt within the electrolytic cell 1.

The jacket 14 that performs the temperature adjustment of the first hydrogen gas pipe 10 is disposed on a downstream side of a connecting portion in which the second hydrogen gas pipe 21 is connected with the first hydrogen gas pipe 10. The jacket 14 is preferably disposed in the position as close to the top plate 1a of the electrolytic cell 1 as possible.

Next, a circulation process of the thus constructed hydrogen gas supply system 3 is explained.

The subsidiary product gas (hydrogen gas) which is generated at the cathode 5 and contains the hydrogen fluoride gas vaporized from the molten salt and the components derived from the molten salt such as the molten salt mist, is guided to the second hydrogen gas pipe 21, but is not directly guided to the first hydrogen gas pipe 10. The subsidiary product gas passing through the second hydrogen gas pipe 21 is then guided to the first hydrogen gas pipe 10 for circulating hydrogen fluoride, so that hydrogen fluoride present in the subsidiary product gas is liquefied at the portion of the first hydrogen gas pipe 10 on which the jacket 14 being thermally adjusted is disposed.

The hydrogen fluoride liquefied flows back to the cathode chamber 8 through the first hydrogen gas pipe 10 due to its own weight. When the hydrogen fluoride liquefied returns to the cathode chamber 8, the molten salt mist is absorbed by the hydrogen fluoride liquefied. Thus, it is possible to return the hydrogen fluoride liquefied to the cathode chamber 8 together with the molten salt mist.

The above-described second embodiment can attain the following functions and effects.

The second fluorine gas pipe 19 for guiding the main product gas (fluorine gas) which is generated in the anode chamber 7 and contains the hydrogen fluoride gas vaporized from the molten salt and the mist component derived from the molten salt, and the first fluorine gas pipe 9 for circulating hydrogen fluoride liquefied are provided separately from each other. Further, the second hydrogen gas pipe 21 for guiding the subsidiary product gas (hydrogen gas) which is generated at the cathode 5 and contains the hydrogen fluoride gas vaporized from the molten salt and the mist component derived from the molten salt, and the first hydrogen gas pipe 10 for circulating hydrogen fluoride liquefied are provided separately from each other. With this construction, a flow of each of the gases generated from the electrolytic cell 1 can be separated from a flow path of the hydrogen fluoride liquefied.

Accordingly, an amount of the main product gas and an amount of the subsidiary product gas which are respectively generated in the electrolytic cell can be increased. Even when the linear velocity of the respective gases in the pipes guiding the gases becomes larger, the upwardly flowing force of the gases generated from the electrolytic cell 1 does not exceed the falling force of liquefied hydrogen fluoride which is caused due to its own weight, so that the liquefied hydrogen fluoride can be normally returned to the electrolytic cell.

In particular, the second embodiment of the present invention can be effectively applied to such a case where the linear velocity of the respective gases in the pipes guiding the main product gas and the subsidiary product gas generated in the electrolytic cell becomes 10 cm/sec or more.

### [Modification of Second Embodiment]

In the above-described second embodiment, the pipe that guides each of the main product gas and the subsidiary product gas generated in the electrolytic cell, and the pipe that circulates hydrogen fluoride contained in each of the gases generated are provided separately from each other. With this construction, even when increasing the amount of each of the gases to be generated in the electrolytic cell, hydrogen fluoride can be normally liquefied and circulated.

However, in the second embodiment, the connecting portion between the pipe that guides each of the main product gas and the subsidiary product gas generated in the electrolytic cell and the pipe that circulates hydrogen fluoride contained in each of the gases is not covered with the heat exchange mechanism such as the jacket, and a flow of each of the gases generated in the electrolytic cell and a flow of hydrogen fluoride liquefied become complicated. Therefore, it is likely that the possibility of occurrence of clogging of the connecting portion increases.

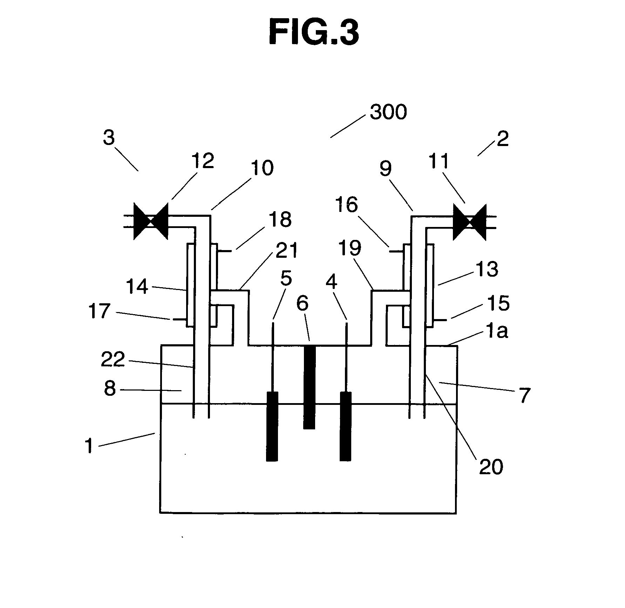

To solve the above problem, in a fluorine gas generation device 300 as shown in FIG. 3, a connecting portion between the pipe 9 for guiding the main product gas generated in the electrolytic cell 1 and the pipe 19 for circulating hydrogen fluoride contained in the main product gas is disposed within the jacket 13, and a connecting portion between the pipe 10 for guiding the subsidiary product gas generated in the electrolytic cell 1 and the pipe 21 for circulating hydrogen fluoride contained in the subsidiary product gas is disposed within the jacket 14. With this construction, it is possible to reduce clogging that occurs in the connecting portion.

The construction of other parts of the modification of the second embodiment is similar to the construction of the second embodiment.

### Examples

The present invention will be explained in detail hereinafter by Examples, but it is not intended to limit the invention to these Examples.

### [Example 1]

FIG. 1 is a schematic diagram showing an experimental apparatus used in Example 1.
A stainless steel pipe having a diameter (φ) of 1/4 inch was used as the first fluorine gas pipe 9 and the hydrogen gas pipe 10. A stainless steel pipe having a diameter (φ) of 1 inch and a length (L) of 15 cm was used as the jacket 13, and arranged to cool the first fluorine gas pipe 9. The jacket 13 was disposed on a portion of the first fluorine gas pipe 9 which was located in the position spaced by 20 cm from the top plate 1a of the electrolytic cell 1.

A cooling temperature of the portion of the first fluorine gas pipe 9 on which the jacket was disposed was adjusted to -50°C by flowing a heating medium through the jacket. A silicone oil was used as the heating medium.

A current value for the electrolytic cell 1 was retained such that the linear velocity of the gases in the first fluorine gas pipe 9 became 7 cm/sec, and a continuous operation of the electrolytic cell 1 was carried out. Even when the continuous operation was carried out for 150 hours, no clogging of the pipe in the electrolytic cell 1 occurred.

Further, the material of a portion of the first fluorine gas pipe 9 between the electrolytic cell 1 and the jacket 13 was changed from the stainless steel pipe to a PFA pipe. As a result of visual observation to determine whether or not hydrogen fluoride was liquefied and circulated, it was recognized that hydrogen fluoride was liquefied.

Further, after the electrolysis was stopped, a portion of the first fluorine gas pipe 9 which extended downstream of the portion cooled by the jacket 13 was disassembled, and an inside thereof was observed. As a result, it was confirmed that there was no adhesion of a KF component to the inside. As a result of similar visual observation of the valve 11, it was also confirmed that there was no adhesion of a KF component to the inside.

### [Comparative Example 1]

The same apparatus as that in Example 1 was used. A heating medium was not allowed to flow through the jacket 13, and the first fluorine gas pipe 9 was kept at room temperature. Other conditions used herein were the same as those in Example 1. The same procedure as in Example 1 was carried out under the above condition. When electrolysis was conducted for about 40 hours, the pressure in the anode chamber 7 began to increase. In consequence, it was considered that clogging of the pipe 9 occurred, and therefore, the electrolysis was stopped.

Further, after stopping the electrolysis, the first fluorine gas pipe 9 was disassembled, and an inside thereof was observed. As a result, it was confirmed that white solid matter was present inside the pipe 9. Further, it was also confirmed that the white solid matter was adhered to the valve.

Elementary analysis of the solid matter was carried out using an X-ray fluorescence analyzer. It was confirmed that a KF component derived from the molten salt was contained in the solid matter.

### [Example 2]

A stainless steel pipe having a diameter (φ) of 1/4 inch was used as the first fluorine gas pipe 9. A stainless steel pipe having a diameter (φ) of 2 inches and a length (L) of 300 mm was used as the jacket 13. The jacket 13 was disposed on a portion of the first fluorine gas pipe 9 which was located spaced by 30 cm from the top plate 1a of the electrolytic cell 1. Further, Raschig rings each having a diameter (φ) of 6 mm were filled in the portion of the first fluorine gas pipe 9 on which the jacket 13 was disposed.

A cooling temperature of the portion of the first fluorine gas pipe 9 on which the jacket was disposed was adjusted to -55°C by flowing a heating medium through the jacket. A silicone oil was used as the heating medium.

A current value for the electrolytic cell 1 was retained such that the linear velocity of the gases in the first fluorine gas pipe 9 became 7 cm/sec, and a continuous operation of the electrolytic cell 1 was carried out. Even when the continuous operation was carried out for one year, the continuous operation of the electrolytic cell 1 was able to be stably carried out without occurrence of clogging of the first fluorine gas pipe.

In a case where the conventional fluorine gas generation device that traps molten salt components using a filter (for instance, Japanese Patent Application Unexamined Publication No. 2006-111900) is used, the operation of the electrolytic cell must be stopped every several tens of hours in order to replace or regenerate the filter.

In contrast, as described in the above Example 1 and Example 2, in the fluorine gas generation device according to the present invention, it is not necessary to conduct the washing of the valve or the pipe that guides the main product gas and the subsidiary product gas generated in the electrolytic cell, and stop the operation of the electrolytic cell. In addition, the fluorine gas generation device according to the present invention can stably supply the product gas for a long period of time. From these viewpoint, it was recognized that the fluorine gas generation device according to the present invention could attain considerably large effects.

### [Comparative Example 2]

A stainless steel pipe having a diameter (φ) of 1 inch was used as the first fluorine gas pipe 9. A current value for the electrolytic cell 1 was retained such that the linear velocity of the gases in the first fluorine gas pipe 9 on which the jacket 13 was not disposed became 7 cm/sec, and a continuous operation of the electrolytic cell 1 was carried out. When three months have elapsed, clogging of the first fluorine gas pipe occurred.

The first fluorine gas pipe 9 and the valve 11 were disassembled, and an inside thereof was observed. As a result, it was confirmed that white solid matter was adhered to the inside of the valve 11, and the clogging of the valve was caused by the white solid matter.

Elementary analysis of the solid matter was carried out using an X-ray fluorescence analyzer. It was confirmed that a KF component derived from the molten salt was contained in the solid matter, similarly to Comparative Example 1.

### [Example 3]

A stainless steel pipe having a diameter (φ) of 1/4 inch and a PFA (polytetrafluoroethylene) pipe having a diameter (φ) of 1/4 inch were used as the first fluorine gas pipe 9 and as the first hydrogen gas pipe 10. A stainless steel pipe having a diameter (φ) of 1 inch and a length (L) of 15 cm was used as the jacket 13, and arranged to cool the first fluorine gas pipe 9. The jacket 13 was disposed on a portion of the first fluorine gas pipe 9 which was located in the position spaced by 30 cm from the top plate 1a of the electrolytic cell 1. Meanwhile, the PFA pipe was used as a portion of the respective φ 1/4 inch pipes located on the lower side of the jacket 13 such that visual observation of an inside of the portion of the respective pipes could be carried out. A window was formed in the electrolytic cell, such that visual observation of liquid level variation in the electrolytic cell could be carried out. The pipe for supplying hydrogen fluoride was connected to a portion of the first fluorine gas pipe 9 which was located on the lower side of the jacket 13.

A cooling temperature of the portion of the first fluorine gas pipe 9 on which the jacket 13 was disposed was adjusted to -55°C by flowing a heating medium through the jacket 13. A silicone oil was used as the heating medium.

A current value for the electrolytic cell 1 was retained such that the linear velocity of the gases in the first fluorine gas pipe 9 became 7.8 cm/sec, and a continuous operation of the electrolytic cell 1 was carried out. A hydrogen fluoride gas was added into the first fluorine gas pipe 9 in an amount of 17 sccm (0.12 equivalent), and a hydrogen fluoride concentration in the downstream portion of the first fluorine gas pipe 9 (on the downstream side of the jacket 13) was measured using a Fourier transform infrared spectrometer (FT-IR). Further, visual observation of liquid level of the molten salt during circulation of hydrogen fluoride liquefied was carried out to thereby check whether or not rapid boiling of liquid level of the molten salt and variation in liquid level of the molten salt occurred.

As a result, it was confirmed that the hydrogen fluoride concentration in the downstream portion of the first fluorine gas pipe 9 (on the downstream side of the jacket 13) as measured by the Fourier transform infrared spectrometer (FT-IR) was 9.6%.

As a result of visual observation to determine whether or not hydrogen fluoride was liquefied and circulated, it was confirmed that hydrogen fluoride was liquefied. Further, as a result of visual observation of liquid level of the molten salt during circulation of liquefied hydrogen fluoride, it was confirmed that neither rapid boiling of liquid level of the molten salt nor variation in liquid level of the molten salt occurred.

### [Comparative Example 3]

The same procedure as in Example 3 was carried out under the same condition as in Example 3 except that the amount of a hydrogen fluoride gas added into the first fluorine gas pipe 9 was changed to 34 sccm (0.24 equivalent). As a result of visual observation of liquid level of the molten salt during circulation of liquefied hydrogen fluoride, it was confirmed that rapid boiling of liquid level of the molten salt and variation in liquid level of the molten salt occurred.

### [Example 4]

The same procedure as in Example 3 was carried out under the same condition as in Example 3 except that the amount of a hydrogen fluoride gas added into the first fluorine gas pipe 9 was changed to 8 sccm (0.06 equivalent) and the cooling temperature of the portion of the first fluorine gas pipe 9 on which the jacket 13 was disposed was changed to -59°C.

As a result, the hydrogen fluoride concentration in the downstream portion of the first fluorine gas pipe 9 (on the downstream side of the jacket 13) was 8.0%. Also, as a result of visual observation to determine whether or not hydrogen fluoride was liquefied and circulated, it was confirmed that hydrogen fluoride was liquefied. Further, as a result of visual observation of liquid level of the molten salt during circulation of liquefied hydrogen fluoride, it was confirmed that neither rapid boiling of liquid level of the molten salt nor variation in the liquid level occurred.

From the results of Example 3, Example 4 and Comparative Example 3, it is recognized that by adjusting concentration of hydrogen fluoride to be added, liquefied hydrogen fluoride can be circulated without causing rapid boiling of liquid level of the molten salt and variation in the liquid level.

### [Reference Example 1]

The same procedure as in Example 3 was carried out under the same condition as in Example 3 except that a hydrogen fluoride gas was not added into the first fluorine gas pipe 9. As a result, it was confirmed that the hydrogen fluoride concentration in the downstream portion of the first fluorine gas pipe 9 (on the downstream side of the jacket 13) as measured by the Fourier transform infrared spectrometer (FT-IR) was 9.8%.

From the results of Reference Example 1 and Example 3, it is recognized that by adding a suitable amount of a hydrogen fluoride gas into the first fluorine gas pipe, hydrogen fluoride can be circulated without increasing the hydrogen fluoride concentration in the product gas (F₂).

### INDUSTRIAL APPLICABILITY

The present invention is applicable to an apparatus for generating a fluorine gas.

## Claims

1. A fluorine gas generation device that generates a fluorine gas by electrolyzing hydrogen fluoride in a molten salt containing potassium fluoride and hydrogen fluoride, the fluorine gas generation device comprising:
an electrolytic cell that electrolyzes hydrogen fluoride in an electrolytic bath constituted of the molten salt containing potassium fluoride and hydrogen fluoride to generate a main product gas containing a fluorine gas as a main component on a side of an anode and a subsidiary product gas containing a hydrogen gas as a main component on a side of a cathode;
a first pipe that guides each of the main product gas and the subsidiary product gas from the electrolytic cell, the main product gas and the subsidiary product gas each containing a hydrogen fluoride gas vaporized from the molten salt in the electrolytic cell and mist derived from the molten salt which is entrained on the main product gas and the subsidiary product gas upon generation thereof, and
a heat exchange mechanism that is disposed on the first pipe to adjust a temperature of a portion of the first pipe;
wherein hydrogen fluoride liquefied in the portion of the first pipe whose temperature is adjusted by the heat exchange mechanism is returned to the electrolytic cell.

2. The fluorine gas generation device as claimed in claim 1, further comprising a dip tube that is connected to a lower portion of the first pipe and returns the liquefied hydrogen fluoride to the electrolytic cell; and
a second pipe that is connected to the electrolytic cell and the first pipe and guides each of the main product gas and the subsidiary product gas which contains the hydrogen fluoride gas vaporized from the molten salt of the electrolytic cell and the mist derived from the molten salt which is entrained on the main product gas and the subsidiary product gas upon generation thereof,
wherein the dip tube is immersed in the electrolytic bath of the electrolytic cell, such that a passage that guides each of the main product gas and the subsidiary product gas generated in the electrolytic cell, and a passage that returns the liquefied hydrogen fluoride to the electrolytic cell are provided separately from each other.

3. The fluorine gas generation device as claimed in claim 2, wherein a connecting portion at which the first pipe and the second pipe are connected with each other is located inside of the heat exchange mechanism that adjusts a temperature of the portion of the first pipe.

4. The fluorine gas generation device as claimed in any one of claims 1 to 3, wherein the heat exchange mechanism is located in a position spaced by a distance of not less than 0 cm and not more than 200 cm from an upper portion of a top plate of the electrolytic cell.

5. The fluorine gas generation device as claimed in any one of claims 1 to 4, wherein a packing material is filled in an inside of the first pipe on which the heat exchange mechanism is disposed.

6. The fluorine gas generation device as claimed in claim 5, wherein the packing material filled in an inside of the first pipe on which the heat exchange mechanism is disposed is a regular packing material or an irregular packing material.

7. The fluorine gas generation device as claimed in any one of claims 1 to 6, wherein a heating medium or a cooling medium is allowed to pass through the heat exchange mechanism.

8. The fluorine gas generation device as claimed in any one of claims 1 to 7, wherein a temperature of the gas in the portion of the first pipe equipped with the heat exchange mechanism is adjusted to not less than a melting point of hydrogen fluoride and not more than a boiling point of hydrogen fluoride.

9. The fluorine gas generation device as claimed in any one of claims 1 to 8, wherein a pipe for supplying hydrogen fluoride is connected to the first pipe equipped with the heat exchange mechanism, and the hydrogen fluoride is added into the first pipe in an amount of 0.01 to 0.12 equivalent when a temperature of an inside of the first pipe equipped with the heat exchange mechanism is in a range of -83°C to - 50°C.

10. The fluorine gas generation device as claimed in any one of claims 1 to 3, wherein the heat exchange mechanism is located in a position spaced by a distance of not less than 10 cm and not more than 100 cm from an upper portion of a top plate of the electrolytic cell.
